# EUROPEAN PATENT SPECIFICATION

(11) **EP 2 902 516 B1**
(45) Date of publication and mention of the grant of the patent: **12.07.2017**
(21) Application number: 15152323.0
(22) Date of filing: 23.01.2015
(51) Int. Cl.: C22C 19/05

(54) **A weld filler for nickel-base superalloys**
Schweißzusatzwerkstoff für Superlegierungen auf Nickelbasis
Produit d'apport de soudure pour superalliages à base de nickel

(30) Priority: 31.01.2014 US 201414169234
(43) Date of publication of application: 05.08.2015
(73) Proprietor: General Electric Company, Schenectady, NY 12345 (US)
(72) Inventor: Liu, Shan, Greenville, SC South Carolina 29615 (US); Feng, Ganjiang, Greenville, SC South Carolina 29615 (US); Kottilingham, Srikanth Chandrudu, Greenville, SC South Carolina 29615 (US); Cui, Yan, Greenville, SC South Carolina 29615 (US); Tollison, Brian Lee, Greenville, SC South Carolina 29615 (US)
(74) Representative: Pöpper, Evamaria

(56) References cited:
- WO-A2-2005/056852
- GB-A- 632 712
- US-A- 6 077 615
- US-A1- 2006 131 366

## Description

### FIELD OF THE INVENTION

The present invention is directed to a weld filler metal for nickel base superalloys, and specifically to a nickel base weld filler metal that develops a high volume fraction of gamma prime phase in the weld repaired region.

### BACKGROUND OF THE INVENTION

Components located in the high temperature section of gas turbine engines are typically formed of superalloys, which includes nickel-base superalloys. High temperature sections of the gas turbine engine include the turbine section. In some types of turbine engines, the high temperature section may include the exhaust section. The different hot sections of the engine may experience different conditions requiring the materials comprising the components in the different sections to have different properties.

Turbine buckets or airfoils in the turbine section of the engine are attached to turbine wheels and rotate at very high speeds in the hot exhaust gases of combustion expelled by the turbine section of the engine. The turbine wheels with their buckets comprise a turbine stage and extract energy from the hot exhaust gases of combustion. A turbine engine has at least one turbine stage, but more typically includes a plurality of turbine stages, each extracting energy from the hot exhaust gases of combustion. The hot exhaust gases, after passing through a turbine stage and before entering a downstream turbine stage, are routed through stationary nozzles, sometimes referred to as vanes, which redirect the flow of the exhaust gases for proper impingement on the next turbine stage. These nozzles, since they experience the same environment as buckets or airfoils, desirably should have many of the same materials properties as the buckets or airfoils. For example, these components must simultaneously be oxidation-resistant and corrosion-resistant, while maintaining mechanical properties such as creep resistance and fatigue resistance at elevated temperatures experienced in a gas turbine exhaust. The nozzles do not experience all of the loadings that turbine stages are subject to, as they are stationary. Much of the stress experienced by nozzles is a result of high thermal stresses and, to a lesser degree, mechanical stresses such as aerodynamic loading. As a result, the nozzles must have excellent resistance to thermal fatigue and creep resistance, especially for large, multi-airfoil latter stage nozzles whose size and weight may make them subject to creep. At operating temperature, the nozzles support at least their own weight.

Nickel-base superalloys have typically been used to produce components for use in the hot sections of the engine since they can provide the desired properties that satisfy the demanding conditions of the turbine section environment. These nickel-base superalloys have high temperature capabilities, while achieving strength from precipitation strengthening mechanisms which include the development of coherent gamma prime precipitates. Alloys such as GTD^{®} 222, GTD^{®}-111, MAR-M^{®}-247, WASPALLOY^{®} and UDIMET^{®} 500 are used to make latter stage nozzles working at temperatures of 816°C (1500° F) and above. Long period exposure to these temperatures and mechanical forces make the hot locations, such as nozzle leading edges prone to creep, while thermal mechanical fatigue may be experienced near cooling holes.

Such a nozzle always contains a significant amount of strategic elements such as nickel, chromium, cobalt and tantalum. In addition, the cost of fabricating such a nozzle is high. So extending the life of a nozzle after indications develop is a cost-effective option and repair procedures have been developed to remove the indications to extend the life of a nozzle, while avoiding replacement costs. Removal of indications in a nozzle through blending and subsequent weld buildup with a filler material is currently employed to restore the structural integrity of a nozzle. However, weld repairs with the widely used filler such as Nimonic 263 have been repeatedly proven to experience premature indications after being returned to service.

Document US 2006/131366 A1 discloses a repair welding method for precipitation-strengthened superalloys and a special weldment with two different filler materials. Document WO 2005/056852 A2 describes a nickel base superalloy to form gas turbine components. What is needed is a weld repair that includes a weld repair alloy that is not as susceptible to cracking in the weld repair area in a high temperature environment, while being resistant to corrosion and high temperature oxidation.

### SUMMARY OF THE INVENTION

A nickel base weld filler material is provided, as defined in claim 1, which develops at least 27% (by volume) of the gamma prime (γ') phase in the weld zone after post weld heat treat (PWHT) is set forth. A weld repair, as used herein, comprises a weld zone, in which weld filler material is deposited and some of the base material adjacent to the deposited weld filler is melted. The weld repair includes a heat affected zone (HAZ) adjacent to the deposited weld zone, as well as an unaffected base metal adjacent to the HAZ. The weld zone is characterized by columnar grains extending from the base material to the middle of the weld, which in turn precipitates up to 30% vol. γ' phase after a predetermined PWHT. The weld zone microstructure is further characterized by an absence of the eta (η) phase. The HAZ, as is typical, displays some grain growth.

The nickel base weld filler material, hereinafter referred to as NiFillerX™, comprises or consists of, in weight percent, 0.03-0.13% C, 22.0-23.0% Cr, 18.5-19.5% Co, 1.8-2.2% W, 0.7-1.4% Nb, 2.2-2.4% Ti, 1.3-2.0% Al, 0.005-0.040% Zr, 0.002-0.008% B, up to 0.15% Mo, up to 0.35% Fe, up to 0.10% Mn, up to 0.10% Cu, up to 0.10% V, up to 0.15% Hf, up to 0.25% Si, and the balance Ni and incidental impurities and an absence of Ta., wherein the weld filler material comprises uniformly distributed γ' particles in the range of 0.3 to 1.0 micrometers. Advantageously, the nickel base weld filler material provides a structural weld repair that is crack resistant even in highly stressed areas.

The use of the nickel base weld filler material allows for repair and continued use of complex and expensive parts that develop indications after extended service. The use of this nickel base weld filler material also allows for repair of new nickel base articles that develop indications during casting but prior to service, such as in the thin trailing edge of nozzles or removal of indications in downstream fabrication operations that require weld buildup.

Because the nickel base weld filler material is free of Ta, the material is cheaper than the filler material that it replaces, Ta being a strategic material that has limited availability in North America.

Other features and advantages of the present invention will be apparent from the following more detailed description of the preferred embodiment, taken in conjunction with the accompanying drawings which illustrate, by way of example, the principles of the invention.

### BRIEF DESCRIPTION OF THE DRAWINGS

Figure 1 is a perspective view of an exemplary nickel base superalloy article, a turbine nozzle segment.
Figure 2 is a photomicrograph of the formation of γ' in NiFillerX^{™} after aging.
Figure 3 is a graph of the Ultimate Tensile Strength of GTD^{®}-222 filler, NIMONIC^{®} 263 filler and NiFillerX^{™} after a PWHT at elevated temperatures.
Figure 4 is a graph of elongation of GTD^{®}-222 filler, NIMONIC^{®} 263 filler and NiFillerX^{™} after a PWHT at elevated temperatures.
Figure 5 is a graph of low cycle fatigue (LCF) of GTD^{®}-222 filler, NIMONIC^{®} 263 filler and NiFillerX^{™} after a PWHT at elevated temperatures.
Figure 6 is a graph of creep-rupture testing providing the creep rupture life of GTD^{®}-222 filler, NIMONIC^{®} 263 filler and NiFillerX^{™} after a post weld heat treatment at 871° C (1600° F) and 97 MPa (14 ksi) stress.
Figure 7 is a photomicrograph of the microstructure near a crack tip of a NIMONIC^{®} 263 weld joint in a GTD^{®}-222 base metal after creep-rupture testing showing needlelike eta phase particle across the grain boundaries in the weld joint.
Figure 8 is a photomicrograph of the microstructure near a crack tip of a NiFillerX^{™} weld joint in a GTD-222^{®} base metal after creep-rupture testing showing a lack of needlelike eta phase particle in the weld joint.
Figure 9 is a low magnification photomicrograph of a weld joint and heat affected zone of NiFillerX^{™} after PWHT in GTD-222^{®} base material.
Figure 10 is a high magnification photomicrograph of the highlighted area of Figure 9 of the weld joint and heat affected zone of NiFillerX^{™} after PWHT in GTD^{®}-222 base material.

### DETAILED DESCRIPTION OF THE INVENTION

A tantalum-free nickel base weld filler material is set forth. Weld joints made with the tantalum-free (Ta-free) weld filler material are particularly useful for weld repairs for certain high temperature nickel base materials that derive their strength from precipitation strengthening mechanisms which include the formation of γ'.

γ' is the major precipitation strengthening phase in nickel base superalloys and is a stable face centered cubic (FCC) intermetallic precipitate comprising primarily Ni₃Al. It exhibits long-range order to near its melting point of about 1385° C (2525° F). Niobium (Nb), also referred to as columbium (Cb), Tantalum (Ta) and Titanium (Ti) may atomically substitute aluminum (Al) for up to 60%. Although beyond the scope of this disclosure, the γ' precipitates in the matrix contribute to strengthening and creep and fatigue resistance by restricting dislocation movement through the grains. Furthermore, uniformly distributed γ' particles in the range of 0.3∼1.0 micrometers are more effective in resisting creep and fatigue than finer precipitates, as dislocations are less able to penetrate into or bypass these large γ' particles.

Nickel base superalloys are usually used in the fabrication of parts used in the hot section of turbine engines, such as turbine buckets and turbine nozzles and combustion components. Latter stage turbine nozzles, stage 2 and later stages further to the rear of the turbine engine are of particular interest because of their large size and weight while being subject to high temperature and rapidly flowing exhaust gases.

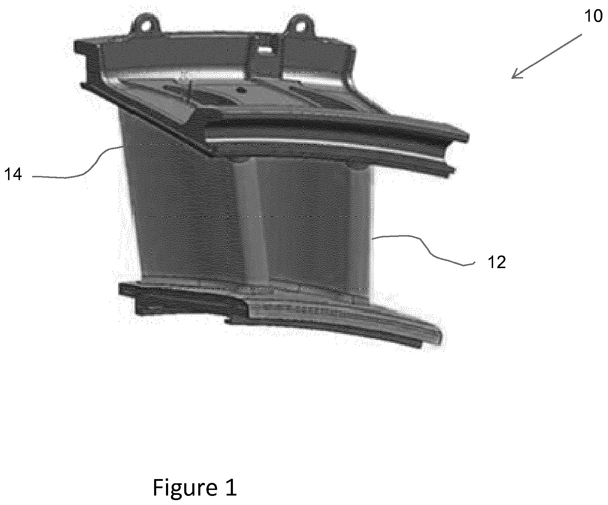

These parts thus must maintain their strength at high temperatures, while being subject to high temperatures of exhaust gases for long periods of time. Because of the high stress, these parts are subject to creep as a result of their exposure to high temperatures for long periods of time. For example, turbine nozzles, such as a turbine nozzle segment 10 shown in Figure 1, may develop indications, such as repairable cracks which form along their leading edge 12 as a result of creep. Thermal mechanical fatigue in the thin-wall locations such as near a cooling hole in the trailing edge 14 (Figure 1) of a nozzle also induces indications such as repairable cracking. So, these parts must be oxidation resistant, corrosion resistant while being creep and fatigue-resistant and maintaining their ductility and strength at high temperatures.

Repairable indications such as these cracks are not limited to components operating in a turbine. New make nozzles sometimes have indications such as repairable cracks in the fillet between thin trailing edges 14 and the side walls during casting manufacture. Post-cast mishandling and mis-machining in downstream fabrications also can result in indications that require weld buildup.

Repairing the regions that develop indications in such articles is highly desirable because of their great expenses, but repairs must both restore the geometries of the structure as well as the mechanical and metallurgical properties of the materials comprising the structure. Otherwise premature indications will redevelop.

Repairs in nickel base superalloy parts or articles for hot gas path applications in gas turbines have been accomplished by welding, such as by arc welding processes including but not limited to tungsten inert gas (TIG) processes also referred to as Gas Tungsten Arc Welding (GTAW). A weld repair includes the addition of weld filler and the melting of adjacent base metal. Remelting of the thin layer of base metal obviously replaces the originally coarse grains with much finer ones, and therefore the solidified metal in the weld zone does not have the same microstructure as the microstructure of the article before welding. In addition, the heat affected zone (HAZ) between the fully remelt and unaffected base metal will invariably experience grain growth which is greatest closest to the weld zone.

Widely used fillers for repair of defects in such nickel base materials include Nimonic 263. The composition of NIMONIC^{®} 263 is provided in Table 1. Nimonic 263 develops ~8% γ' phase, while the base material of latter stage nozzles contains at least 27% vol. γ' phase particles. Thus, the weld repair zone using Nimonic 263 filler has much lower creep and fatigue capabilities than the base material. Moreover, other undesirable phases, such as η phases (Ni₃Ti) and/or other TCP phases, easily form in the weld to further reduce the creep and fatigue resistance in the weld.

**TABLE 1 COMPOSITION OF NIMONIC 263 AND GTD-222**

| Composition | NIMONIC^{®} 263 (Nominal) | GTD^{®}-222 (Nominal) |
|---|---|---|
| C | 0.06% | 0.1% |
| Cr | 20% | 22.5% |
| Co | 20% | 19% |
| W | | 2% |
| Nb | | 0.8% |
| Ta | | 1% |
| Ti | 2.1% | 2.3% |
| Al | 0.45% | 1.2% |
| Zr | | 0.020% |
| B | 0.005%max | 0.008% |
| Mo | 5.9% | 0.15%max |
| Fe | 0.7%max | 0.35%max |
| Mn | 0.60%max | 0.10%max |
| Cu | 0.20%max | 0.10%max |
| V | | 0.10%max |
| Hf | | 0.15%max |
| Si | 0.40%max | 0.25%max |
| Ni | balance + impurities | balance + impurities |

Welds made using NIMONIC^{®} 263 filler and heat treated to develop a microstructure experience a design life shorter than desired because of the lower mechanical properties of the weld joint as compared to adjacent base material such as GTD^{®}-222. Thus, NIMONIC^{®} 263 is not a preferred weld repair material.

Indications may develop in weld joints with low volume fractions of γ' at elevated temperatures of operation due to the linkage of creep voids. Creep voids generally form along the grain boundaries, resulting in the formation of an indication. In addition, eta (η) phases having a needle-like morphology may develop at and near the grain boundaries in the weld joint. η phases are Ni₃Ti hexagonal close packed (HCP) structures that result from the transformation of stable Ni₃Al(Ti) into metastable Ni₃Ti. The η phases are to be avoided as they deteriorates the strength, ductility, creep and fatigue capabilities of γ'-containing nickel base superalloys.

Besides NIMONIC^{®} 263, GTD^{®}-222 filler has been developed, but its use in nickel base superalloy repair is very rare. This may be more related to the fact that the GTD-^{®}222 filler is a more expensive alternative because it includes Ta as an expensive additive. Moreover, welds made with GTD-222 filler develop η phase needles after PWHT, which downgrade the creep and fatigue capabilities of the weld.

A new filler alloy, NiFillerX^{™}, is thus provided that improves the properties of the weld zone to the same as, if not better than, the base metal. The chemical composition of NiFillerX^{™} is set forth in Table 2. The filler alloy nominally comprises 0.08% C, 22.5% Cr, 19.0% Co, 2.0% W, 1.1% Nb, 2.3% Ti, 1.8% Al, 0.02% Zr, 0.005% B, 0.15% Mo max., 0.35% Fe max., 0.10% Mn max., 0.10% Cu max., 0.10% V max., 0.15% Hf max., 0.25% Si max, and the balance essentially Ni and incidental impurities. Importantly, the nickel base weld filler alloy is further characterized by the absence of tantalum (Ta). The term "balance essentially nickel" or "balance of the alloy essentially nickel" is used to include, in addition to nickel, small amounts of impurities and other incidental elements, some of which have been described above, that are inherent in nickel base superalloys, which in character and/or amount do not affect the advantageous aspects of the superalloy.

**Table 2 NiFillerX^{™} Composition**

| Composition | NiFillerX™ (Nominal) | NiFillerX™ (Range) |
|---|---|---|
| C | 0.08% | 0.03-0.13% |
| Cr | 22.5% | 22.0-23.0% |
| Co | 19.0% | 18.5-19.5% |
| W | 2.0% | 1.8-2.2% |
| Nb | 1.1% | 0.7-1.4% |
| Ta | | |
| Ti | 2.3% | 2.2-2.4% |
| Al | 1.7% | 1.3-2.0% |
| Zr | 0.02% | 0.005-0.040% |
| B | 0.005% | 0.002-0.008% |
| Mo | 0.15% max | 0.15% max |
| Fe | 0.35% max | 0.35% max |
| Mn | 0.10% max | 0.10% max |
| Cu | 0.10% max | 0.10% max |
| V | 0.10% max | 0.10% max |
| Hf | 0.15% max | 0.15% max |
| Si | 0.25% max | 0.25% max |
| Ni | balance + impurities | balance + impurities |

NiFillerX^{™} weld rod can be prepared by ingot casting then wire drawing or by sintering of atomized powders. The alloy has sufficient ductility for swaging into thin wires for welding applications.

A NiFillerX^{™} weld in nickel base superalloy materials such as GTD^{®}-222 can develop a microstructure, after heat treatment, having large precipitates of at least 27%, and preferably 30% γ' by volume, while avoiding the formation of the η phase after high temperature exposure. As used herein, the term "large precipitates of γ'" means γ' particles ≥0.3 micrometers and is understood to be used in relation to the precipitates of γ' formed by other nickel base superalloy filler materials, and in particular, the precipitates of γ' formed by NIMONIC^{®} 263 filler.

One clear difference between NiFillerX^{™} and both Nimonic 263 filler and GTD^{®}-222 filler is that NiFillerX^{™} includes more aluminum Al. While the weight percentage amount seems small (nominally, 0.6% by weight more than GTD^{®}-222 and 1.35% more than Nimonic^{®} 263), NiFillerX^{™} includes 33% more Al than GTD^{®}-222 and 300% more Al than Nimonic^{®} 263. The increase in the ratio of Al over Ti in NiFillerX^{™} moves it away from region that forms the η phase; the sum of Al+Ti also increases volume fraction of γ', thereby creep and fatigue strength of the weld joint formed with NiFillerX^{™}, when properly heat treated, is expected to be significantly improved. Another key difference between GTD^{®}-222 filler and NiFillerX^{™} is that the latter does not include any of the expensive element tantalum (Ta), which lowers its cost.

A heat treatment is required to fully develop the microstructure of the NiFillerX^{™} weld joint using any precipitation hardenable nickel-base superalloy filler material. A preferred post weld heat treatment will precipitate and fully develop the γ' in the weld joint. One PWHT comprises heating the article to a temperature of about 1093-1149° C (2000-2100° F) for about 2 hours followed by aging at a temperature of 760-871° C (1400-1600° F) for a period in the range of 2-8 hours to develop precipitates of γ' of no less than 0.3 micrometers to provide the desired mechanical properties. It will be understood that lower aging temperatures should be accompanied by longer aging times. A preferred post weld heat treatment is a standard vacuum heat treatment that includes heating the article to a temperature of 1121 °C (2050° F) for two hours, followed by an aging treatment of 802° C (1475° F) for 4 hours.

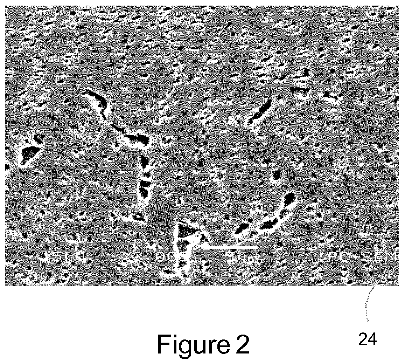

Figure 2 is a photomicrograph of a NiFillerX^{™} weld in a GTD^{®}-222 base metal, after a post weld heat treatment to solutionize and age the γ' particles. The photomicrograph displays substantially uniformly distributed γ' particles 24 within the γ matrix of the weld, the γ' particles having a size of greater than 0.3 micrometers, and on average 0.6 micrometers. NIMONIC^{®} 263 filler produces a much finer (<0.3 micrometers) γ' phase in the weld joint. The volume fraction of γ' in weld joint formed of NiFillerX^{™} is ∼30% by volume, which is obviously greater than in the weld joint formed of Nimonic^{®} 263 filler, which volume fraction of γ' is restricted due to reduced aluminum content.

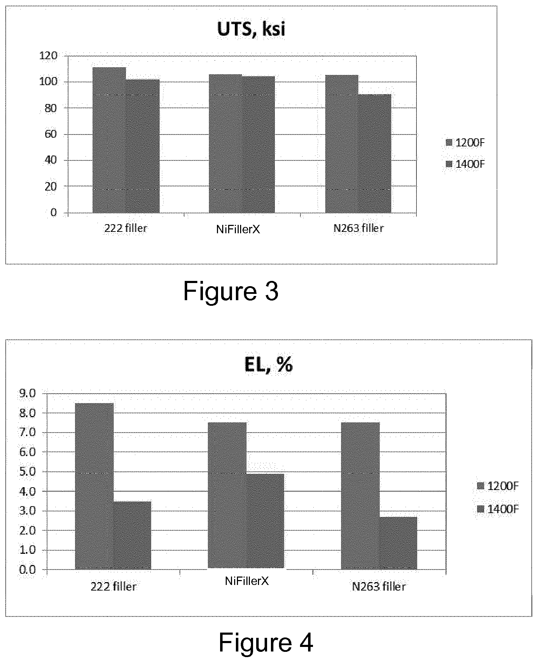

Referring now to Figures 3-5, a comparison of relevant mechanical properties data for NiFillerX^{™} to other state-of-the art nickel base superalloy weld filler materials, specifically GTD^{®}-222 filler and NIMONIC^{®} 263 filler, after PWHT is provided. Figure 3 is a graph of the Ultimate Tensile Strength (UTS) of GTD^{®}-222, NIMONIC^{®} 263 and NiFillerX^{™} at elevated temperatures after PWHT in a weldment of GTD^{®}-222 base metal. As can be seen, although there are slight differences between the three weld alloys, the UTS at elevated temperatures are comparable.

Figure 4 is a graph of elongation of GTD^{®}-222 filler, NIMONIC^{®} 263 filler and NiFillerX^{™} at elevated temperatures after a PWHT in a weldment of GTD^{®}-222 base metal. The elongation of the three alloys at 649° C (1200° F) is comparable. However, at 760° C (1400° F), the elongation of the NIMONIC^{®} 263 is appreciably lower, particularly as compared to the NiFillerX^{™}.

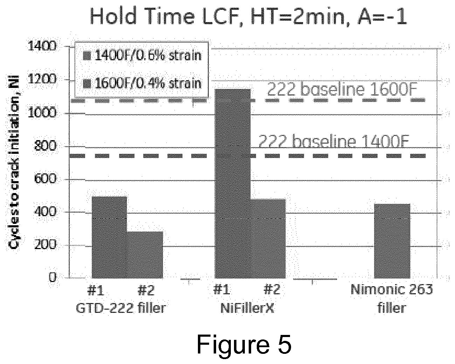

Figure 5 is a graph comparing the low cycle fatigue (LCF) of three different filler materials at 649°C (1400° F) and 0.6% strain and at 871°C (1600° F) and 0.4% strain. The baseline for GTD^{®}-222 superalloy base material at these conditions has been superimposed on the graph. As can be readily seen, welds with NIMONIC^{®} 263 filler and GTD^{®}-222 filler have comparable LCF life while NiFillerX^{™} weld has much superior LCF life. In fact, NiFillerX^{™} has about the same LCF capability as the base metal GTD^{®}-222 at 871° C (1600° F), which is within the working temperature range during turbine operations.

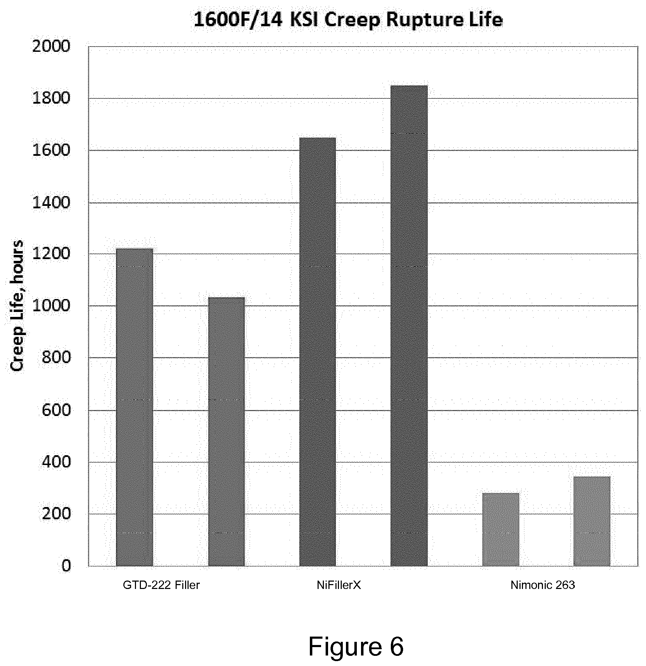

Figure 6 is a graph comparing the creep rupture life (two tests for each filler material) of welds of the three different filler materials at 871° C (1600° F) under a stress of 97 MPa (14 ksi) after PWHT in a GTD^{®}-222 base material. It must be noted that that one test for NiFillerX^{™} was discontinued at 1950 hours. The average creep rupture life of the NiFillerX^{™} weld is greater than 1920 hours. As is evident, the creep rupture life of a weld using NiFillerX^{™} is about twice as long as that using GTD^{®}-222 filler and vastly superior to the creep rupture life of NIMONIC^{®} 263 weldment, having at least four times the creep rupture life of NIMONIC^{®} 263 on average.

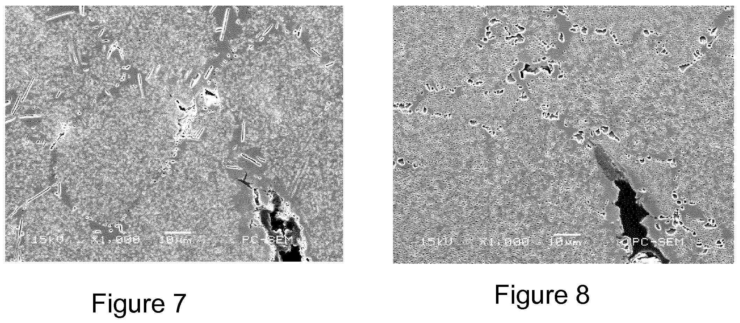

Figures 7 and 8 are photomicrographs of the microstructure near a crack tip of a NIMONIC^{®} 263 weld joint and in a NiFillerX^{™} weld joint respectively, both welds made with a GTD^{®}-222 base metal after creep-rupture testing. After testing, Figure 7 shows η phase needles across the grain boundaries in the weld joint while there is no needlelike η phase in the NiFillerX^{™} weld (Figure 8). As previously noted, it is known that the η phase forms from metastable γ' and weakens the structure. The absence of η phase from the NiFillerX^{™} weld joint after creep rupture testing, as shown in Figure 8 imparts the weld with the superior creep rupture properties of the NiFillerX^{™} weld joint reported in Figure 6 since nucleation of creep voids around the non-deformable η phase such as is present in the NIMONIC^{®} 263 weld joint is prevented.

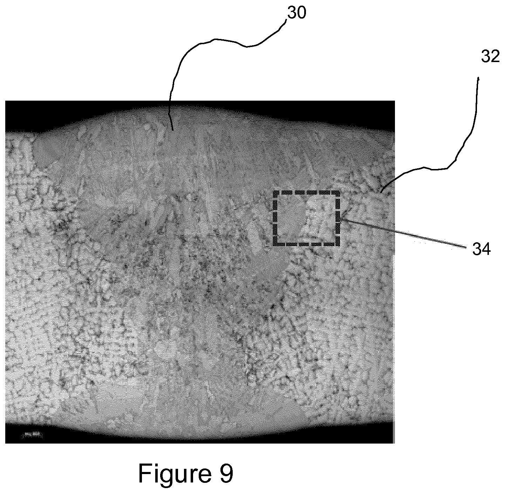

A weld made with NiFillerX^{™} filler was tested using standard nondestructive testing techniques such as fluorescent penetrant testing, radiographic testing and ultrasonic testing. The nondestructive testing techniques disclosed no observable defects in the weld joint or in the HAZ. Subsequently such a weld was sectioned to examine the metallurgical quality under different magnifications. Figure 9 is a low magnification photomicrograph of a cross-section of a weld joint and HAZ of NiFillerX^{™} weldment after PWHT in GTD^{®}-222 base material and there are no cracks, oxide inclusions or lack of fusion between the weld and base metal. Both non-destructive test and destructive test results confirm the excellent weldability of NiFillerX^{™} for a later stage nozzle alloy such as GTD^{®}-222.

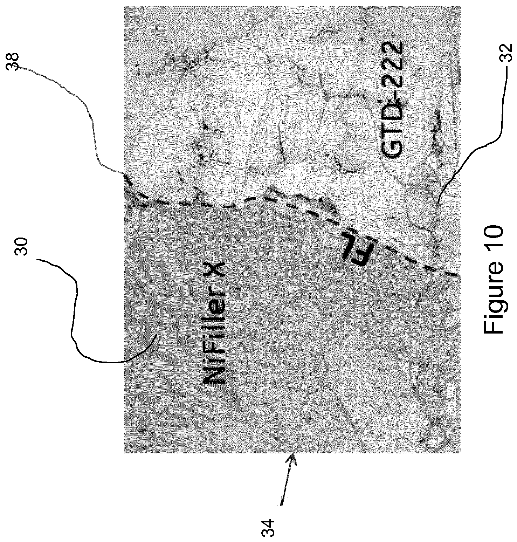

Figure 10 is a high magnification photomicrograph of the highlighted area 34 of Figure 9 of the weld joint 30 and HAZ 34 of NiFillerX^{™} weldment after PWHT in GTD^{®}-222 base material. Fusion line (FL) 38 represents the fusion line of the molten metal with the base material as the molten metal solidified, which shows indication-free bonding with the base metal. Moreover, there is no η phase present in the weld. Within the HAZ, recrystallized grains are evident adjacent to weld joint 30, which is a normal grain structure near a FL.

The weld joint of the present invention was made by standard GTAW techniques, which is the preferred welding technique. However, the use of the filler material in a weld joint is not limited to applying the weld material in a weldment by GTAW techniques, as any other weld technique for repairing a defect in a nickel base superalloy article may be used. Thus, for example, depending upon the article and the required repair, shielded metal arc welding (SMAW), laser welding, gas metal arc welding (GMAW) and other techniques may be used.

The present invention provides a filler metal that results in a weldment having superior mechanical properties at a lower cost than current available filler metals. The filler metal is not dependent on the availability of limited strategic elements. The weld repair in the article allows the article when placed in service, to have a longer service life than weldments made of currently available filler material.

Both the size distribution and volume fraction of γ' particles are crucial to impart a weldment using NiFillerX^{™} filler with superior mechanical and metallurgical properties under severe operation conditions during turbine operation. The particle size γ' particles shall be no smaller than 0.3 micrometers and is preferred to be in the range of 0.5-1.0 micrometers. Though the elements in NiFillerX^{™} may vary in the specified range as shown in Table 2, the resultant γ' phase shall be no lower than 27.0% by volume and is preferred to be in the range of 28.0∼30.0% by volume.

Various aspects and embodiments of the present invention are defined by the following numbered clauses:
1. A nickel base weld filler material, comprising, in weight percent:
   0.03-0.13% C, 22.0-23.0% Cr, 18.5-19.5% Co, 1.8-2.2% W, 0.7-1.4% Nb, 2.2-2.4% Ti, 1.3-2.0% Al, 0.005-0.040% Zr, 0.002-0.008% B, up to 0.15% Mo, up to 0.35% Fe, up to 0.10% Mn, up to 0.10% Cu, up to 0.10% V, up to 0.15% Hf, up to 0.25% Si, and the balance Ni and incidental impurities;
   and wherein the weld filler material is characterized by an absence of Ta.
2. The nickel base weld filler material of clause 1 further having a γ' precipitate size of at least 0.3 micrometers.
3. The nickel base weld filler material of clause 1 or clause 2, further including a volume fraction of at least 27% γ' particles uniformly distributed in a γ matrix.
4. The nickel base weld filler material of any preceding clause, further including a volume fraction of at least 27% γ' particles uniformly distributed in a γ matrix after post weld heat treatment.
5. The nickel base weld filler material of clause 4, further characterized by an absence of a η phase.
6. A weldment comprising:
   a weld joint;
   a heat affected zone adjacent to the fusion line; and
   a nickel base alloy base material adjacent to the heat affected zone and opposite the weld joint;
   wherein the weld joint comprises a nickel base weld filler material, having a composition, in weight percent of
   0.03-0.13% C, 22.0-23.0% Cr, 18.5-19.5% Co, 1.8-2.2% W, 0.7-1.4% Nb, 2.2-2.4% Ti, 1.3-2.0% Al, 0.005-0.040% Zr, 0.002-0.008% B, up to 0.15% Mo, up to 0.35% Fe, up to 0,10% Mn, up to 0.10% Cu, up to 0.10% V, up to 0.15% Hf, up to 0.25% Si, and the balance Ni and incidental impurities;
   and wherein the weld filler material is characterized by an absence of Ta.

1. The weldment of clause 6, wherein the nickel base alloy base material comprises an alloy selected from the group consisting of GTD-222, GTD-241, GTD-262 and Nimonic 263.
2. The weldment of clause 6 or clause 7, wherein the nickel base alloy base material includes at least 27% by volume γ'.
3. The weldment of any one of clauses 6 to 8, wherein the weld joint includes at least 27% by volume γ' after post weld heat treatment.
4. The weldment of clause 9, wherein the weld joint includes 28-30% by volume γ' after post weld heat treatment.
5. The weldment of clause 9 or clause 10, wherein the weld joint is further characterized by an absence of a η phase.
6. The weldment of any one of clauses 6 to 11, wherein the weld joint is characterized by a creep rupture life of greater than 1600 hours at 871° C (1600° F) at 97 MPa (14 ksi).
7. The weldment of clause 12, wherein the weld joint is characterized by a creep rupture life of greater than 1920 hours at 871° C (1600° F) at 97 MPa (14 ksi).
8. The weldment of any one of clauses 6 to 13, wherein the weld joint is characterized by an LCF of greater than 1000 cycles at 871° C (1600° F) and 0.4% strain.
9. A method for repairing an indication in a nickel base superalloy article, comprising the steps of:
   providing a nickel base superalloy article, having an indication;
   providing a nickel base weld filler material, comprising, in weight percent: 0.03-0.13% C, 22-23% Cr, 18.5-19.5% Co, 1.8-2.2% W, 0.7-1.4% Nb, 2.2-2.4% Ti, 1.3-2.0% Al, 0.005-0.040% Zr, 0.002-0.008% B, up to 0.15% Mo, up to 0.35% Fe, up to 0,10% Mn, up to 0.10% Cu, up to 0.10% V, up to 0.15% Hf, up to 0.25% Si, and the balance Ni and incidental impurities,
   and wherein the weld filler material is characterized by an absence of Ta,
   applying the nickel base weld filler material to the indication in the nickel base superalloy article using a preselected weld technique to form a weldment having a weld joint, a heat affected zone adjacent a fusion line of the weld joint and an unaffected base material adjacent the heat affected zone, the weld joint including melted base material of the superalloy article and melted weld filler material;
   post weld heat treating the weldment to precipitate and fully develop γ' in the weld joint.
10. The method of clause 15, wherein the preselected weld technique is selected from the group consisting of GTAW, SMAW, and GMAW.
11. The method of clause 16, wherein the preselected weld technique is GTAW.
12. The step of post weld heat treatment of any one of clauses 15 to 17, wherein post weld heat treating further includes heat treating to provide a weld joint having a microstructure having at least 27% by volume γ' having a size of at least 0.3 micrometers distributed in a γ matrix.
13. The step of post weld heat treatment of clause 18, including heating to a temperature of 1093-1149° C (2000-2100° F) for sufficient time to solutionize the weldment, followed by aging at a temperature in the range of 760-871° C (1400-1600° F) for 2-8 hours.
14. The step of post weld heat treatment of clause 19, wherein heating to solutionize is performed at a temperature of 1121°C (2050° F) for two hours followed by an aging treatment of 802° C (1475° F) for 4 hours.

## Claims

1. A nickel base weld filler material, comprising, in weight percent:
0.03-0.13% C, 22.0-23.0% Cr, 18.5-19.5% Co, 1.8-2.2% W, 0.7-1.4% Nb, 2.2-2.4% Ti, 1.3-2.0% Al, 0.005-0.040% Zr, 0.002-0.008% B, up to 0.15% Mo, up to 0.35% Fe, up to 0.10% Mn, up to 0.10% Cu, up to 0.10% V, up to 0.15% Hf, up to 0.25% Si, and the balance Ni and incidental impurities and an absence of Ta;
and wherein the weld filler material comprises uniformly distributed γ' particles in the range 0.3 to 1.0 micrometers.

2. The nickel base weld filler material of claim 1, further including a volume fraction of at least 27% γ' particles uniformly distributed in a γ matrix.

3. The nickel base weld filler material of any preceding claim, further including a volume fraction of at least 27% γ' particles uniformly distributed in a γ matrix after post weld heat treatment.

4. The nickel base weld filler material of claim 3, further **characterized by** an absence of a η phase.

5. A weldment comprising:
a weld joint;
a heat affected zone adjacent to the fusion line; and
a nickel base alloy base material adjacent to the heat affected zone and opposite the weld joint;
wherein the weld joint comprises a nickel base weld filler material, having a composition, in weight percent of
0.03-0.13% C, 22.0-23.0% Cr, 18.5-19.5% Co, 1.8-2.2% W, 0.7-1.4% Nb, 2.2-2.4% Ti, 1.3-2.0% Al, 0.005-0.040% Zr, 0.002-0.008% B, up to 0.15% Mo, up to 0.35% Fe, up to 0,10% Mn, up to 0.10% Cu, up to 0.10% V, up to 0.15% Hf, up to 0.25% Si, and the balance Ni and incidental impurities and an absence of Ta;
and wherein the weld filler material comprises uniformly distributed γ' particles in the range 0.3 to 1.0 micrometers.

6. The weldment of claim 5 wherein the nickel base alloy base material comprises an alloy selected from the group consisting of GTD-222, GTD-241, GTD-262 and Nimonic 263.

7. The weldment of claim 5 or 6, wherein the nickel base alloy base material includes at least 27% by volume γ'.

8. The weldment of any one of claims 5 to 7, wherein the weld joint includes at least 27% by volume γ' after post weld heat treatment.

9. The weldment of claim 8 wherein the weld joint includes 28-30% by volume γ' after post weld heat treatment.

10. The weldment of claim 8 or claim 9, wherein the weld joint is further **characterized by** an absence of a η phase.

11. A method for repairing an indication in a nickel base superalloy article, comprising the steps of:
providing a nickel base superalloy article, having an indication;
providing a nickel base weld filler material, comprising, in weight percent:
0.03-0.13% C, 22-23% Cr, 18.5-19.5% Co, 1.8-2.2% W, 0.7-1.4% Nb, 2.2-2.4% Ti, 1.3-2.0% Al, 0.005-0.040% Zr, 0.002-0.008% B, up to 0.15% Mo, up to 0.35% Fe, up to 0,10% Mn, up to 0.10% Cu, up to 0.10% V, up to 0.15% Hf, up to 0.25% Si, and the balance Ni and incidental impurities, and an absence of Ta,
applying the nickel base weld filler material to the indication in the nickel base superalloy article using a preselected weld technique to form a weldment having a weld joint, a heat affected zone adjacent a fusion line of the weld joint and an unaffected base material adjacent the heat affected zone, the weld joint including melted base material of the superalloy article and melted weld filler material;
post weld heat treating the weldment to precipitate and fully develop γ' in the weld joint to have uniformly distributed γ' particles in the range 0.3 to 1.0 micrometers.

12. The method of claim 11, wherein the preselected weld technique is selected from the group consisting of GTAW, SMAW, and GMAW.

13. The step of post weld heat treatment of claim 11 or claim 12, including heating to a temperature of 1093 - 1149 degrees Centigrade (2000-2100°F) for sufficient time to solutionize the weldment, followed by aging at a temperature in the range of 760 - 871 degrees Centigrade (1400-1600° F) for 2-8 hours.

14. The step of post weld heat treatment of claim 13, wherein heating to solutionize is performed at a temperature of 1121 degrees Centigrade (2050° F) for two hours followed by an aging treatment of 802 degrees Centigrade (1475° F) for 4 hours.

## Patentansprüche

1. Schweißzusatzwerkstoff auf Nickelbasis, der in Gewichtsprozent Folgendes umfasst:
0,03 bis 0,13% C, 22,0 bis 23,0% Cr, 18,5 bis 19,5% Co, 1,8 bis 2,2% W, 0,7 bis 1,4% Nb, 2,2 bis 2,4% Ti, 1,3 bis 2,0% Al, 0,005 bis 0,040% Zr, 0,002 bis 0,008% B, bis zu 0,15% Mo, bis zu 0,35% Fe, bis zu 0,10% Mn, bis zu 0,10% Cu, bis zu 0,10% V, bis zu 0,15% Hf, bis zu 0,25% Si, und den Rest Ni und zufällige Verunreinigungen und kein Ta;
und wobei der Schweißzusatzwerkstoff gleichmäßig verteilte γ'-Teilchen im Bereich von 0,3 bis 1,0 Mikrometer umfasst.

2. Schweißzusatzwerkstoff auf Nickelbasis nach Anspruch 1, der ferner einen Volumenanteil von mindestens 27% γ'-Teilchen aufweist, die gleichmäßig in einer γ-Matrix verteilt sind.

3. Schweißzusatzwerkstoff auf Nickelbasis nach einem der vorhergehenden Ansprüche, der ferner einen Volumenanteil von mindestens 27% γ'-Teilchen aufweist, die nach einer im Anschluss an das Schweißen erfolgenden Wärmebehandlung gleichmäßig in einer γ-Matrix verteilt sind.

4. Schweißzusatzwerkstoff auf Nickelbasis nach Anspruch 3, der ferner durch ein Nichtvorhandensein einer η-Phase gekennzeichnet ist.

5. Schweißkonstruktion, umfassend:
eine Schweißverbindung;
eine Wärmeeinflusszone angrenzend an die Schmelzlinie; und
einen Grundwerkstoff aus einer Nickelbasis-Legierung angrenzend an die Wärmeeinflusszone und gegenüber der Schweißverbindung;
wobei die Schweißverbindung einen Schweißzusatzwerkstoff auf Nickelbasis umfasst, der eine Zusammensetzung in Gewichtsprozent aus Folgendem aufweist:
0,03 bis 0,13% C, 22,0 bis 23,0% Cr, 18,5 bis 19,5% Co, 1,8 bis 2,2% W, 0,7 bis 1,4% Nb, 2,2 bis 2,4% Ti, 1,3 bis 2,0% Al, 0,005 bis 0,040% Zr, 0, 002 bis 0,008% B, bis zu 0,15% Mo, bis zu 0,35% Fe, bis zu 0,10% Mn, bis zu 0,10% Cu, bis zu 0,10% V, bis zu 0,15% Hf, bis zu 0,25% Si, und den Rest Ni und zufällige Verunreinigungen und kein Ta;
und wobei der Schweißzusatzwerkstoff gleichmäßig verteilte γ'-Teilchen im Bereich von 0,3 bis 1,0 Mikrometer umfasst.

6. Schweißkonstruktion nach Anspruch 5, wobei der Grundwerkstoff aus einer Nickelbasis-Legierung eine Legierung umfasst, die aus der Gruppe bestehend aus GTD-222, GTD-241, GTD-262 und Nimonic 263 ausgewählt ist.

7. Schweißkonstruktion nach Anspruch 5 oder 6, wobei der Grundwerkstoff aus einer Nickelbasis-Legierung mindestens 27 Volumen-% γ' aufweist.

8. Schweißkonstruktion nach einem der Ansprüche 5 bis 7, wobei die Schweißverbindung nach einer im Anschluss an das Schweißen erfolgenden Wärmebehandlung mindestens 27 Volumen-% γ' aufweist.

9. Schweißkonstruktion nach Anspruch 8, wobei die Schweißverbindung nach einer im Anschluss an das Schweißen erfolgenden Wärmebehandlung 28 bis 30 Volumen-% γ' aufweist.

10. Schweißkonstruktion nach Anspruch 8 oder Anspruch 9, wobei die Schweißverbindung ferner durch ein Nichtvorhandensein einer η-Phase gekennzeichnet ist.

11. Verfahren zum Reparieren einer Anzeige in einem Erzeugnis aus einer Nickelbasis-Superlegierung, das folgende Schritte umfasst:
Bereitstellen eines Erzeugnisses aus einer Nickelbasis-Superlegierung, das eine Anzeige aufweist;
Bereitstellen eines Schweißzusatzwerkstoffs auf Nickelbasis, der in Gewichtsprozent Folgendes umfasst:
0,03 bis 0,13% C, 22 bis 23% Cr, 18,5 bis 19,5% Co, 1,8 bis 2,2% W, 0,7 bis 1,4% Nb, 2,2 bis 2,4% Ti, 1,3 bis 2,0% Al, 0,005 bis 0,040% Zr, 0,002 bis 0,008% B, bis zu 0,15% Mo, bis zu 0,35% Fe, bis zu 0,10% Mn, bis zu 0,10% Cu, bis zu 0,10% V, bis zu 0,15% Hf, bis zu 0,25% Si, und den Rest Ni und zufällige Verunreinigungen und kein Ta,
Auftragen des Schweißzusatzwerkstoffs auf Nickelbasis auf die Anzeige in dem Erzeugnis aus einer Nickelbasis-Superlegierung unter Verwendung eines vorher ausgewählten Schweißverfahrens zum Bilden einer Schweißkonstruktion mit einer Schweißverbindung, einer Wärmeeinflusszone angrenzend an eine Schmelzlinie der Schweißverbindung und einem nicht beeinflussten Grundwerkstoff angrenzend an die Wärmeeinflusszone, wobei die Schweißverbindung geschmolzenen Grundwerkstoff des Superlegierungserzeugnisses und geschmolzenen Schweißzusatzwerkstoff aufweist;
nach dem Schweißen erfolgende Wärmebehandlung der Schweißkonstruktion zum Ausscheiden und vollständigen Ausbilden von γ' in der Schweißverbindung, damit gleichmäßig verteilte γ'-Teilchen im Bereich von 0,3 bis 1,0 Mikrometer vorliegen.

12. Verfahren nach Anspruch 11, wobei das vorher ausgewählte Schweißverfahren aus der Gruppe bestehend aus Wolfram-Inertgasschweißen, Schutzgaslichtbogenschweißen und Metallschutzgasschweißen ausgewählt wird.

13. Schritt der nach dem Schweißen erfolgenden Wärmebehandlung nach Anspruch 11 oder Anspruch 12, der ein Erwärmen auf eine Temperatur von 1093 bis 1149 Grad Celsius (2000 bis 2100 °F) über einen ausreichenden Zeitraum zum Lösungsglühen der Schweißkonstruktion mit anschließendem Auslagern bei einer Temperatur im Bereich von 760 bis 871 Grad Celsius (1400 bis 1600 °F) für 2 bis 8 Stunden umfasst.

14. Schritt der nach dem Schweißen erfolgenden Wärmebehandlung nach Anspruch 13, wobei die Erwärmung zum Lösungsglühen bei einer Temperatur von 1121 Grad Celsius (2050° F) für zwei Stunden mit anschließender Auslagerungsbehandlung bei 802 Grad Celsius (1475 °F) für 4 Stunden erfolgt.

## Revendications

1. Matériau d'apport de soudage à base de nickel, comprenant, en pourcentage en poids :
0,03-0,13 % de C, 22,0-23,0 % de Cr, 18,5-19,5 % de Co, 1,8-2,2 % de W, 0,7-1,4 % de Nb, 2,2-2,4 % de Ti, 1,3-2,0 % d'Al, 0,005-0,040 % de Zr, 0,002-0,008 % de B, jusqu'à 0,15 % de Mo, jusqu'à 0,35 % de Fe, jusqu'à 0,10 % de Mn, jusqu'à 0,10 % de Cu, jusqu'à 0,10 % de V, jusqu'à 0,15 % d'Hf, jusqu'à 0,25 % de Si et le reste de Ni et d'impuretés fortuites et pas de Ta ;
et le matériau d'apport de soudage comprenant des particules γ' dans la plage de 0,3 à 1,0 micromètre uniformément réparties.

2. Matériau d'apport de soudage à base de nickel selon la revendication 1, comprenant en outre une fraction volumique d'au moins 27 % de particules γ' uniformément réparties dans une matrice γ.

3. Matériau d'apport de soudage à base de nickel selon une quelconque revendication précédente, comprenant en outre une fraction volumique d'au moins 27 % de particules γ' uniformément réparties dans une matrice γ après traitement thermique après soudage.

4. Matériau d'apport de soudage à base de nickel selon la revendication 3, **caractérisé en outre par** l'absence d'une phase η.

5. Ensemble soudé comprenant :
un joint soudé ;
une zone touchée par la chaleur adjacente à la ligne de fusion ; et
un matériau à base d'alliage à base de nickel adjacent à la zone touchée par la chaleur et à l'opposé du joint soudé ;
le joint soudé comprenant un matériau d'apport de soudage à base de nickel, ayant une composition, en pourcentage en poids, de
0,03-0,13 % de C, 22,0-23,0 % de Cr, 18,5-19,5 % de Co, 1,8-2,2 % de W, 0,7-1,4 % de Nb, 2,2-2,4 % de Ti, 1,3-2,0 % d'Al, 0,005-0,040 % de Zr, 0,002-0,008 % de B, jusqu'à 0,15 % de Mo, jusqu'à 0,35 % de Fe, jusqu'à 0,10 % de Mn, jusqu'à 0,10 % de Cu, jusqu'à 0,10 % de V, jusqu'à 0,15 % d'Hf, jusqu'à 0,25 % de Si et le reste de Ni et d'impuretés fortuites et pas de Ta ;
et le matériau d'apport de soudage comprenant des particules γ' dans la plage de 0,3 à 1,0 micromètre uniformément réparties.

6. Ensemble soudé selon la revendication 5, le matériau à base d'alliage à base de nickel comprenant un alliage choisi dans le groupe constitué par les alliages GTD-222, GTD-241, GTD-262 et Nimonic 263.

7. Ensemble soudé selon la revendication 5 ou 6, le matériau à base d'alliage à base de nickel comprenant au moins 27 % en volume de γ'.

8. Ensemble soudé selon l'une quelconque des revendications 5 à 7, l'ensemble soudé comprenant au moins 27 % en volume de γ' après traitement thermique après soudage.

9. Ensemble soudé selon la revendication 8, l'ensemble soudé comprenant 28-30 % en volume de γ' après traitement thermique après soudage.

10. Ensemble soudé selon la revendication 8 ou la revendication 9, l'ensemble soudé étant en outre **caractérisé par** l'absence d'une phase η.

11. Procédé pour la réparation d'une d'imperfection dans un article en superalliage à base de nickel, comprenant les étapes consistant à :
fournir un article en superalliage à base de nickel, ayant une imperfection ;
fournir un matériau d'apport de soudage à base de nickel, comprenant, en pourcentage en poids : 0,03-0,13 % de C, 22-23 % de Cr, 18,5-19,5 % de Co, 1,8-2,2 % de W, 0,7-1,4 % de Nb, 2,2-2,4 % de Ti, 1,3-2,0 % d'Al, 0,005-0,040 % de Zr, 0,002-0,008 % de B, jusqu'à 0,15 % de Mo, jusqu'à 0,35 % de Fe, jusqu'à 0,10 % de Mn, jusqu'à 0,10 % de Cu, jusqu'à 0,10 % de V, jusqu'à 0,15 % d'Hf, jusqu'à 0,25 % de Si et le reste de Ni et d'impuretés fortuites et pas de Ta,
appliquer le matériau d'apport de soudage à base de nickel sur l'imperfection dans l'article en superalliage à base de nickel à l'aide d'une technique de soudage préalablement choisie pour former un ensemble soudé ayant un joint soudé, une zone touchée par la chaleur adjacente à une ligne de fusion du joint soudé et un matériau de base non touché adjacent à la zone touchée par la chaleur, le joint soudé comprenant du matériau de base fondu de l'article en superalliage et du matériau d'apport de soudage fondu ;
traiter thermiquement après soudage l'ensemble soudé pour faire précipiter et développer totalement γ' dans le joint soudé pour avoir des particules γ' dans la plage de 0,3 à 1,0 micromètre uniformément réparties.

12. Procédé selon la revendication 11, la technique de soudage préalablement choisie étant choisie dans le groupe constitué par les techniques de soudage GTAW, SMAW et GMAW.

13. Étape de traitement thermique après soudage selon la revendication 11 ou la revendication 12, comprenant le chauffage à une température de 1093-1149 degrés Celsius (2000-2100 °F) pendant un temps suffisant pour former une solution solide de l'ensemble soudé, suivi d'un vieillissement à une température dans la plage de 760-871 degrés Celsius (1400-1600 °F) pendant 2-8 heures.

14. Étape de traitement thermique après soudage selon la revendication 13, le chauffage pour former une solution solide étant effectué à une température de 1121 degrés Celsius (2050 °F) pendant deux heures suivi d'un traitement de vieillissement à 802 degrés Celsius (1475 °F) pendant 4 heures.
